# EUROPÄISCHE PATENTSCHRIFT

(11) **EP 2 285 751 B1**
(45) Veröffentlichungstag und Bekanntmachung des Hinweises auf die Patenterteilung: **02.11.2011**
(21) Anmeldenummer: 09732021.2
(22) Anmeldetag: 21.03.2009
(51) Int. Cl.: C04B 35/484, C04B 35/04, C04B 35/043

(54) **FEUERFESTES KERAMISCHES ERZEUGNIS UND ZUGEHÖRIGES FORMTEIL**
REFRACTORY CERAMIC PRODUCT AND ASSOCIATED MOLDED PART
PRODUIT CÉRAMIQUE RÉFRACTAIRE ET PIÈCE MOULÉE CORRESPONDANTE

(30) Priorität: 18.04.2008 DE 102008019529
(43) Veröffentlichungstag der Anmeldung: 23.02.2011
(73) Patentinhaber: Refractory Intellectual Property GmbH & Co. KG, 1100 Wien (AT)
(72) Erfinder: NILICA, Roland, A-8715 Feistritz (AT); MÜLLER, Mira-Annika, A-8793 Edling-Gai (AT)
(74) Vertreter: Becker, Thomas
(86) Internationale Anmeldenummer: PCT/EP2009/002090
(87) Internationale Veröffentlichungsnummer: WO 2009/127312

(56) Entgegenhaltungen:
- EP-A1- 0 792 851
- CN-A- 1 837 151
- DE-A1- 2 107 004
- DE-A1- 2 552 150
- DE-A1- 2 646 430
- IE-A2- 970 694
- JP-A- 6 107 451
- SU-A1- 833 859
- US-A- 4 212 679
- US-A- 4 849 383
- US-B1- 6 261 983
- RODRIGUEZ-GALICIA ET AL: "The Mechanism of corrosion of MgO?CaZrO3-calcium silicate materials by cement clinker" JOURNAL OF THE EUROPEAN CERAMIC SOCIETY, ELSEVIER SCIENCE PUBLISHERS, BARKING, ESSEX, GB, Bd. 27, Nr. 1, 6. November 2006 (2006-11-06), Seiten 79-89, XP005848778 ISSN: 0955-2219
- O.M.MARGULIS AND A.V. STOVBUR: "Spalling Resistance of oxide products" REFRACTORIES AND INDUSTRIAL CERAMIC, 30. März 2005 (2005-03-30), Seiten 206-209, XP002531266 Springer New York
- M.R. NADLER ET AL.: "Preparation and properties of calcium zirconate" J. OF AMER. CER. SOCIETY, Bd. 33, Nr. 6, 2. Juni 2006 (2006-06-02), Seiten 214-217, XP002531267

## Beschreibung

Die Erfindung betrifft ein feuerfestes keramisches Erzeugnis sowie ein unter Verwendung dieses Erzeugnisses hergestelltes Formteil.

Feuerfeste keramische Materialien auf Basis von Magnesiumoxid (MgO) sowie daraus hergestellte Massen und Formteile sind zur Auskleidung von Hochtemperatur-Aggregaten, beispielsweise Industrieöfen der Eisen- und Stahlindustrie, der Bundmetallindustrie (Nicht-Eisen-Industrie) ebenso bekannt wie zur Auskleidung von Öfen zum Brennen mineralischer Rohstoffe.

Der Nachteil von mehr oder weniger reinen MgO-Produkten liegt in der relativ schlechten Temperatur-Wechselbeständigkeit. In diesem Zusammenhang sind mehrere unterschiedliche Maßnahmen bekannt, um die mechanischen Eigenschaftswerte basischer Formteile, also Formteile auf Basis von MgO, zu verbessern. Dazu gehören MgO-Produkte, die Spinell-Zusätze wie Hercynit enthalten (DE 4403869). Entsprechende Produkte haben sich grundsätzlich bewährt. Allerdings sind die Heißfestigkeiten manchmal nicht ausreichend.

Zusätze von Chromit zu MgO-Erzeugnissen haben den Nachteil, dass es bei der bestimmungsgemäßen Anwendung des feuerfesten Materials zur Bildung von toxischem Chromat kommen kann.

Die CN 1837151 A beschreibt MgO-CaO-ZrO₂-Steine für Zementöfen, die Sand aus Schmelzmagnesia enthalten, mit 75 bis 85 M.-% MgO und 2 bis 6 M.-% Calciumzirkonat. Die DE 2 107 004 A offenbart Schmelzkorn mit 65 bis 82 M.-% Periklas (MgO) und 3 bis 19 M.-% Calciumzirkonat.

Aus der JP 06107451 ist ein feuerfestes Basismaterial bekannt, das 0,1 bis 30 M.-% Calciumzirkonat, Rest: MgO umfasst.

Der Erfindung liegt die Aufgabe zugrunde, ein feuerfestes keramisches Produkt auf Basis MgO mit guten bruchmechanischen Eigenschaften zur Verfügung zu stellen.

Der Erfindung liegt folgende Überlegung zugrunde: In ein feuerfestes keramisches Formteil auf Basis MgO, also mit der Haupt-Gefügephase Periklas, wird eine zweite Gefügephase eingebunden, die grundsätzlich unterschiedliche Eigenschaften besitzt, um bei mechanischer Belastung eine Rissverzweigung im Gefüge zu erreichen, und damit eine Erhöhung der Bruchenergie.

In systematischen Versuchen wurde als eine solche geeignete zweite Phase ein feuerfestes keramisches Erzeugnis gefunden, welche zu mehr als 95 Masse-% aus MgO und Calciumzirkonat besteht und aus einer Schmelze gewonnen wurde.

Zur Herstellung dieses Erzeugnisses werden ein MgO-Rohstoff (zum Beispiel Sintermagnesia oder Schmelzmagnesia), ein Calciumträger (zum Beispiel Branntkalk) sowie Zirkoniumdioxid (ZrO₂) in einem Elektroofen (beispielsweise einem elektrischen Lichtbogenofen) gemeinsam aufgeschmolzen. Die Massenanteile der Rohstoffkomponenten werden so gewählt, dass sich nach der Reaktion im Schmelzprozess Periklas und Calciumzirkonat im Gleichgewicht befinden. Beispielsweise können die Anteile an MgO 50 bis 60 Masse-%, die Anteile an Calciumoxid 10 bis 18 Masse-% und die Anteile an ZrO₂ 25 bis 35 Masse-% betragen.

Durch das gemeinsame Aufschmelzen der Rohstoffkomponenten und anschließende Kristallisation entstehen MgO- und Calciumzirkonat-Gefügephasen, die miteinander verwachsen sind, das heißt, sich zumindest gegenseitig teilweise dreidimensional umschließen. Diese Gefügestruktur charakterisiert ein Durchdringungsgefüge (englisch: myrmekitic intergrowths; penetration textures), dessen weitere Spezifizierung sich aus dem Fachbuch von Dr. Paul Ramdohr "The Ore Minerals And Their Intergrowths", Pergamon Press, Akademie-Verlag GmbH, New York, 1969, 109-127 ergibt. Die entsprechende Offenbarung wird hier übernommen.

Dieses Erzeugnis kann nach weiterer Aufbereitung (Zerkleinerung) als Versatzkomponente (Körnung) mit Sinter- oder Schmelzmagnesia in entsprechender Körnung sowie üblichen Zusätzen wie einem temporären Bindemittel zu einem feuerfesten keramischen Formteil verarbeitet werden.

Das feuerfeste, aus einer erstarrten Schmelze gebildete keramische Erzeugnis (nachstehend Schmelzkorn genannt) besteht also aus ≥ 95 Masse-% die Komponenten MgO und Calciumzirkonat. Das feuerfeste keramische Formteil auf MgO-Basis enthält einen Anteil zwischen 3 und 30 Masse-% dieses Erzeugnisses.

Nach einer Ausführungsform weist das Schmelzkorn einen MgO-Anteil > 15 Masse-% auf. Nach einer weiteren Ausführungsform beträgt der Masseanteil an Calciumzirkonat > 30 % im Erzeugnis.

Nach entsprechenden Vorversuchen hat sich ein MgO-Anteil im Schmelzkorn zwischen 45 und 65 Masse-% sowie ein Calciumzirkonat-Anteil zwischen 35 und 55 Masse-% als günstig herausgestellt.

Wichtig ist es, Nebenbestandteile (als Oxide angegeben und berechnet) wie Al₂O₃, SiO₂, TiO₂ oder Fe₂O₃ möglichst gering zu halten, in jedem Fall in der Summe ≤ 5 Masse-%, wobei der Aluminiumoxid-Gehalt nach einer Ausführungsform < 2 Masse-% und der SiO₂-Gehalt nach einer weiteren Ausführungsform < 1 Masse-% betragen soll, um den hohen Schmelzpunkt und damit die günstige Heißfestigkeit des Schmelzkorns nicht zu gefährden.

Aufgrund der Herstellung dieses Zusatzstoffes aus einer Schmelze weist es eine relativ geringe offene Porosität auf, die nach einer Ausführungsform < 8 Volumen-% beträgt.

Der Anteil der von dem Schmelzkorn gebildeten Gefügephase im feuerfesten keramischen Formteil kann innerhalb der genannten Grenzwerte (3 bis 30 Masse-%) auf Werte > 5 beziehungsweise <20 Masse-% eingeschränkt werden.

Durch die MgO-Gefügematrix besteht das Formteil nach einer Ausführungsform zu mindestens 95 Masse-% aus den Gefügephasen Periklas und Calciumzirkonat.

Auch im gebrannten feuerfesten keramischen Formteil gilt, dass die einzelnen Gefügephasen des Schmelzmaterials dreidimensional miteinander verwachsen sind, sich also gegenseitig umschließen (umgreifen). Dies hat wesentliche Konsequenzen mit Bezug auf die bruchmechanischen Eigenschaften des Formteils. Wird ein Schmelzkorn von einem Riss erfasst, so verläuft der Riss in charakteristischer Weise durch das Korn hindurch. Der Riss läuft dabei der Spaltbarkeit von MgO folgend an die Grenzfläche zum Calciumzirkonat, und verlässt das Calciumzirkonat in einer anderen Richtung. Beim erneuten Auftreffen auf MgO wird der Riss wiederum in Richtung der Spaltbarkeit von MgO abgelenkt. Auf diese Weise entstehen häufig stufig ausgebildete und verzahnte Rissflanken.

Die hohen Schmelzpunkte von MgO (Periklas) und Calciumzirkonat führen zu einem hohen invarianten Punkt von deutlich über 2.000°, also zu guten Werten für die Heißfestigkeit.

Die nachstehenden Beispiele zeigen die bruchmechanischen Daten erfindungsgemäßer Produkte im Vergleich mit einem konventionellen MgO-Formteil (Stein). Hierbei handelt es sich um konkrete Versuchswerte, welche die grundsätzliche Tendenz erkennen lassen, wie sich die bruchmechanischen Eigenschaften eines feuerfesten keramischen Formteils mit einem Anteil des erfindungsgemäßen Schmelzkorns im Vergleich zu reinen MgO-Produkten verbessern lassen.

Weitere Merkmale der Erfindung ergeben sich aus den Merkmalen der Unteransprüche sowie den sonstigen Anmeldungsunterlagen. Dazu gehört die Auswahl geeigneter Körnungen für das Schmelzkorn, beispielsweise 0,3 bis 3 mm, insbesondere 0,5 bis 2 mm, und die MgO-Matrixkomponente (< 5 mm, auch < 3 mm mit einem Feinkornanteil < 100 µm). Der Anteil an MgO + Calciumzirkonat kann auch ≥ 97 Masse-% betragen. Weiters kann das Formteil eine offene Porosität <20 Vol.-%, auch <15 Vol.-% aufweisen.

In den nachstehenden Beispielen wurde ein aus einer erstarrten Schmelze gebildetes keramisches Erzeugnis (Schmelzkorn) verwendet, welches ca. 52 Masse-% MgO und ca. 46 Masse-% Calciumzirkonat enthält, Rest Verunreinigungen wie Al₂O₃, SiO₂, TiO₂, Fe₂O₃.

| | Vergleichsbeispiel (V) | Beispiel 1 (1) | Beispiel 2 (2) |
|---|---|---|---|
| Sintermagnesia < 3 mm, mit einem Anteil an Feinkorn < 100 µm von ca. 1/3 | 100,0 | 88,0 | 94,8 |
| Schmelzkorn 0,5 - 1,0 mm | 0 | 6,0 | 5,2 |
| Schmelzkorn 1,0 - 2,0 mm | 0 | 6,0 | |
| Rohdichte (g/cm³) 1) | 3,10 | 3,12 | 3,12 |
| offene Porosität (Vol.-%) 2) | 13,7 | 13,9 | 12,8 |
| Heißbiegefestigkeit (MPa) bei 1600°C 3) | 14,4 | 10,8 | 14,3 |
| Keilspalttext oxidierend 1400°C (J/m²) 4) | 780 | 2595 | 1312 |

Zur Herstellung der entsprechenden Formteile wurde jeweils Polyvinylalkohol (20 %-ige Lösung) in einer Menge von 2,5 Masse-%, bezogen auf 100 Masse-% MgO-Matrixkomponente, zugesetzt, zu Formteilen verpresst und bei 1750°C gebrannt.

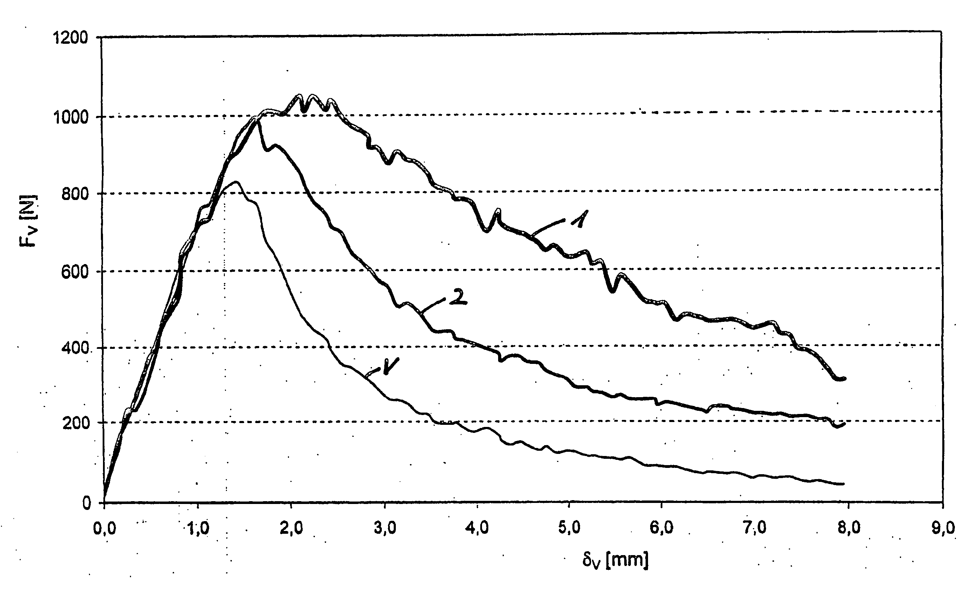

Die Ergebnisse des Keilspalttests (ausgedrückt als Bruchenergie in J/m²) sind in Figur 1 graphisch dargestellt, wobei die Vertikalverschiebung σᵥ [mm] gegen die Vertikallast Fᵥ [N] aufgetragen ist. Die Ziffern an den Graphen entsprechen der Nomenklatur der Beispiele in obiger Tabelle. Daraus lässt sich erkennen, dass die spezifische Bruchenergie des Steins durch den Zusatz des Schmelzkorns im Versatz signifikant gesteigert wird.
1) bestimmt gemäß DIN EN 993-1
2) bestimmt gemäß DIN EN 993-1
3) bestimmt gemäß DIN-EN 993-7
4) bestimmt gemäß W02005/085155 A1

## Patentansprüche

1. Feuerfestes keramisches Formteil mit einer Matrix auf Basis MgO und einem Anteil zwischen 3 und 30 Masse-% eines feuerfesten, aus einer erstarrten Schmelze gebildeten keramischen Erzeugnisses, wobei das Erzeugnis zu ≥ 95 Masse-% aus MgO und Calciumzirkonat besteht.

2. Formteil nach Anspruch 1 mit einem Anteil zwischen 5 und 20 Masse-% des Erzeugnisses.

3. Formteil nach Anspruch 1, das zu > 95 Masse-% aus den Gefügephasen Periklas und Calciumzirkonat besteht.

4. Formteil nach Anspruch 3, das zu > 97 Masse.-% aus den Gefügephasen Periklas und Calciumzirkonat besteht.

5. Formteil nach Anspruch 1, bei dem das Erzeugnis ein Durchdringungsgefüge aufweist.

6. Formteil nach Anspruch 1 mit einer offenen Porosität < 20 Vol.-%.

7. Formteil nach Anspruch 1, dessen Erzeugnis zu ≥ 97 Masse-% aus MgO und Calciumzirkonat besteht.

8. Formteil nach Anspruch 1 mit einem MgO-Anteil > 15 Masse-% im Erzeugnis.

9. Formteil nach Anspruch 1 mit einem Calciumzirkonat-Anteil > 30 Masse-% im Erzeugnis.

10. Formteil nach Anspruch 1 mit einem MgO-Anteil zwischen 45 und 65 Masse-% und einem Calciumzirkonat-Anteil zwischen 35 und 55 Masse-%, jeweils bezogen auf das Erzeugnis.

11. Formteil nach Anspruch 1 mit einem Al₂O₃-Gehalt < 2 Masse-% im Erzeugnis.

12. Formteil nach Anspruch 1 mit einem SiO₂-Gehalt < 1 Masse-% im Erzeugnis.

13. Formteil nach Anspruch 1 mit einer offenen Porosität < 8 Vol.-% im Erzeugnis.

## Claims

1. Refractory ceramic workpiece with an MgO based matrix and a proportion of 3 to 30 % by mass of a ceramic product, formed from a solidified melt, wherein the product comprises ≥ 95 % by mass MgO and calcium zirconate.

2. Workpiece according to claim 1 with a proportion of between 5 and 20 % by mass of the product.

3. Workpiece according to claim 1, > 95 % by mass of which consists of the structural phases periclase and calcium zirconate.

4. Workpiece according to claim 3, > 97 % by mass of which consists of the structural phases periclase and calcium zirconate.

5. Workpiece according to claim 1, in which the product has a penetration texture.

6. Workpiece according to claim 1 with an open porosity of < 20 % v/v.

7. Workpiece according to claim 1, ≥ 97 % by mass of the product consisting of MgO and calcium zirconate.

8. Workpiece according to claim 1 with an MgO content of > 15 % by mass in the product.

9. Workpiece according to claim 1 with a calcium zirconate proportion of > 30 % by mass in the product.

10. Workpiece according to claim 1 with an MgO proportion of between 45 and 65 % by mass and calcium zirconate proportion between 35 and 55 % by mass, both related to the product.

11. Workpiece according to claim 1 with an Al₂O₃ content of < 2 % by mass in the product.

12. Workpiece according to claim 1 with an SiO₂ content of 1 % by mass in the product.

13. Workpiece according to claim 1 with an open porosity of < 8 % v/v in the product.

## Revendications

1. Pièce moulée en céramique réfractaire avec une matrice sur base de MgO et une part comprise entre 3 et 30 % en masse d'un produit céramique réfractaire, créé à partir d'une masse fondue figée, le produit étant constitué à ≥ 95 % en masse de MgO et de zirconate de calcium.

2. Pièce moulée selon la revendication 1 avec une part comprise entre 5 et 20 % en masse du produit.

3. Pièce moulée selon la revendication 1, qui est constituée à raison de > 95 % en masse des phases de structure périclase et zirconate de calcium.

4. Pièce moulée selon la revendication 3, qui est constituée à raison de > 97 % en masse des phases de structure périclase et zirconate de calcium.

5. Pièce moulée selon la revendication 1, dans laquelle le produit comporte une structure de pénétration.

6. Pièce moulée selon la revendication 1 avec une porosité ouverte < 20 % en volume.

7. Pièce moulée selon la revendication 1, dont le produit est constitué à raison de ≥ 97 % en masse de MgO et de zirconate de calcium.

8. Pièce moulée selon la revendication 1, avec une part > 15 % en masse de MgO dans le produit.

9. Pièce moulée selon la revendication 1, avec une part > 30 % en masse de zirconate de calcium dans le produit.

10. Pièce moulée selon la revendication 1, avec une part comprise entre 45 et 65 % en masse de MgO et une part comprise entre 35 et 55 % en masse de zirconate de calcium, chaque fois en rapport au produit.

11. Pièce moulée selon la revendication 1 avec une teneur < 2 % en masse en Al₂O₃ dans le produit.

12. Pièce moulée selon la revendication 1 avec une teneur < 1 % en masse en SiO₂ dans le produit.

13. Pièce moulée selon la revendication 1 avec une porosité ouverte < 8 % en volume dans le produit.
